# EUROPÄISCHE PATENTANMELDUNG

(11) **EP 2 148 049 A1**
(43) Veröffentlichungstag der Anmeldung: **27.01.2010**
(21) Anmeldenummer: 09009324.6
(22) Anmeldetag: 17.07.2009
(51) Int. Cl.: F01N 3/023, F01N 3/08, F01N 9/00

(54) **Verfahren zum Entschwefeln eines NOX-Speicherkatalysators**

(30) Priorität: 25.07.2008 DE 102008034992
(71) Anmelder: VOLKSWAGEN AG, 38436 Wolfsburg (DE)
(72) Erfinder: Ruhnke, Andreas, 30163 Hannover (DE); Düsterdiek, Thorsten, 30569 Hannover (DE)
(74) Vertreter: Pohlmann, Bernd Michael

(57) **Zusammenfassung**

Die Erfindung betrifft ein Verfahren bei einem Verbrennungsmotor (3) eines Kraftfahrzeuges (1) mit einer einen Abgasstrom (7) des Verbrennungsmotors (3) führenden Abgasanlage (7) mit einem NOX Speicherkatalysator (11) (NSK) und einem Partikelfilter (9).

Um eine verbesserte Entschwefelung zu erreichen, wird wiederholt ein Entschwefeln des NOX Speicherkatalysators (11) mittels Einstellen einer unterstöchiometrischen Zusammensetzung (19) des in der Abgasanlage (5) geführten Abgasstroms (7) und ein Regenerieren des Partikelfilters (9) mittels Einstellen einer überstöchiometrischen Zusammensetzung (19) des in der Abgasanlage (5) geführten Abgasstroms (7) zum sofortigen Abbauen einer während der unterstöchiometrischen Zusammensetzung angesammelten Beladung (31) des Partikelfilters (9) durchgeführt.

## Beschreibung

Die Erfindung betrifft Verfahren bei einem Verbrennungsmotor eines Kraftfahrzeuges mit einer einen Abgasstrom des Verbrennungsmotors führenden Abgasanlage mit einem NOX Speicher-katalysator (NSK) und einem Partikelfilter.

NOX-Speicherkatalysatoren können durch Einstellen einer unterstöchiometrischen Abgaszusammensetzung bei vergleichsweise hohen Temperaturen des Abgasstroms und/oder des NOX-Speicherkatalysators desulfatiert werden. Aus der DE 10 2006 017 300 A1 ist bekannt, mit einer hohen Frequenz alternierend gleichzeitig eine Regeneration des NOX-Speicherkatalysators und des Partikelfilters vorzunehmen, wobei eine Entschwefelung des NOX-Speicherkatalysators und eine Entrußung des nachgeschalteten Partikelfilters erfolgen kann. Die DE 10 2006 034 805 A1 betrifft ein Verfahren zur Regeneration eines Partikelfilters und zur Entschwefelung eines NOX-Speicherkatalysators. Dabei kann insbesondere zur Regeneration des Partikelfilters gegenüber einem Normalbetrieb die Temperatur des Partikelfilters in mindestens einer Betriebsart DPF-Heizen angehoben werden und zur Entschwefelung des NOX-Speicherkatalysators in mindestens einer Betriebsart NOX-Speicherkatalysator Heizen der NOX-Speicherkatalysator aufgeheizt werden und in einer darauf folgenden Betriebsart NOX-Speicherkatalysator Entschwefeln ein Lambda-Wert im Abgas von Lambda <1 eingestellt werden. Die DE 199 23 481 A1 betrifft ein Verfahren zur Entschwefelung von wenigstens einem in einem Abgaskanal einer Verbrennungskraftmaschine NOX-Speicherkatalysator. Das Verfahren weist einen mageren und einen fetten Arbeitsmodus auf.

Aufgabe der Erfindung ist es, ein verbessertes Verfahren zur Entschwefelung eines gemeinsam mit einem Partikelfilter in einer Abgasanlage angeordneten NOX-Speicherkatalysators anzugeben.

Die Aufgabe ist mit einem Verfahren bei einem Verbrennungsmotor eines Kraftfahrzeuges mit einer einen Abgasstrom des Verbrennungsmotors führenden Abgasanlage mit einem NOX Speicherkatalysator (NSK) und einem Partikelfilter, gelöst. Das Verfahren weist wechselweises Entschwefeln des NOX Speicherkatalysators mittels Einstellen einer unterstöchiometrischen Zusammensetzung des in der Abgasanlage geführten Abgasstroms und Regenerieren des Partikeifilters mittels Einstellen einer überstöchiometrischen Zusammensetzung des in der Abgasanlage geführten Abgasstroms zum sofortigen Abbauen einer während der unterstöchiometrischen Zusammensetzung angesammelten Beladung des Partikelfilters auf. Die überstöchiometrische bzw. unterstöchiometrische Zusammensetzung des in der Abgasanlage geführten Abgasstroms kann beispielsweise mittels einer Gemischbildung des Verbrennungsmotors, einer Sekundäreinspritzung, einer Sekundärlufteinblasung, einer Abgasrückführungsrate, weiteren Parametern des Verbrennungsmotors und/oder der Abgasanlage und/oder weitere die Zusammensetzung des geführten Abgasstroms beeinflussende Maßnahmen eingestellt werden. Mittels der Sekundäreinspritzung kann Reduktionsmittel dem Abgasstrom, beispielsweise Kraftstoff, zugeführt werden. Mittels der Sekundärlufteinblasung kann dem Abgasstrom ein Oxidationsmittel, beispielsweise der in der eingeblasenen Sekundärluft enthaltene Sauerstoff zugeführt werden. Es ist jedoch auch möglich, ein beliebiges anderes Oxidationsmittel bzw. ein Sauerstoff freisetzendes Mittel dem Abgasstrom zuzuführen. Vorteilhaft kann mittels der unterstöchiometrischen Zusammensetzung des in der Abgasanlage geführten Abgasstroms eine Entschwefelung des NOX-Speicherkatalysators vorgenommen werden, wobei sich in einem gewissen tolerierten Maß aufgrund der unterstöchiometrischen Zusammensetzung Rußpartikel bilden, die sich in dem Partikelfilter niederschlagen können. Vorteilhaft kann sogar ein damit einhergehender gewisser Aufbau der Beladung mit Partikeln, insbesondere Ruß, des Partikeifilters hingenommen werden, da diese mittels der überstöchiometrischen Zusammensetzung des in der Abgasanlage geführten Abgasstroms unmittelbar nach einer Entschwefelungsphase wieder regeneriert beziehungsweise verbrannt werden kann. Die Schritte Entschwefeln und Regenerieren können so oft wiederholt werden, bis eine hinreichend gute Entschwefelung des NOX-Speicherkatalysators erfolgt ist. Das Entschwefeln und Regenerieren kann wechselweise unmittelbar aufeinanderfolgend durchgeführt werden. Alternativ ist es denkbar, die Phasen Entschwefeln und Regenerieren jeweils mit kleinen Pausen wechselweise durchzuführen.

Bei einer Ausführungsform des Verfahrens ist ein Einstellen der unterstöchiometrischen Zusammensetzung für eine erste Zeitspanne T1 und/oder ein Einstellen der überstöchiometrischen Zusammensetzung für eine zweite Zeitspanne T2 vorgesehen. Vorteilhaft können mittels der Zeitspannen das Maß der Entschwefelung und der Regeneration eingestellt werden. Die Zeitspannen können so gewählt werden, dass im Mittel die Beladung des Partikelfilters gleich bleibt.

Bei einer weiteren Ausführungsform des Verfahrens ist ein Einstellen der unterstöchiometrischen Zusammensetzung für einen Lambda-Wert von 0,95 oder maximal 0,95 und/oder ein Einstellen der überstöchiometrischen Zusammensetzung für einen Lambda-Wert von 1,15 oder maximal 1,15 vorgesehen. Vorteilhaft kann bei diesem Lambda-Wert eine besonders gute Entschwefelung des NOX-Speicherkatalysators erfolgen.

Bei einer weiteren Ausführungsform des Verfahrens ist ein Einstellen der ersten Zeitspanne T1 in Abhängigkeit eines Rußemissionswerte aufweisenden Kennfeldes und/oder ein Einstellen der zweiten Zeitspanne T2 in Abhängigkeit des Rußemissionswerte aufweisenden Kennfeldes vorgesehen. Mittels der zugeordneten Rußemissionswerte des Kennfeldes kann auf die Beladung des Partikelfilters und/oder eine Belastung des Partikelfilters mit Partikeln während des Entschwefelns des NOX-Speicherkatalysators geschlossen werden. Vorteilhaft können die Zeitspannen so gewählt werden, dass eine Überlastung des Partikelfilters durch die Rußpartikel ausgeschlossen ist.

Bei einer weiteren Ausführungsform des Verfahrens ist ein Erhöhen der ersten Zeitspanne T1 für geringere Rußemissionswerte des Kennfeldes und umgekehrt und/oder ein Erhöhen der zweiten Zeitspanne T2 für hohe Rußemissionswerte des Kennfeldes und/oder umgekehrt vorgesehen. Vorteilhaft kann bei erwartungsgemäß geringen Rußemissionswerten die Phase des Entschwefelns des NOX-Speicherkatalysators möglichst lange gestaltet werden.

Bei einer weiteren Ausführungsform des Verfahrens ist ein Einstellen der ersten Zeitspanne T1 auf 60 Sekunden für die geringen Rußemissionswerte und/oder ein Einstellen der ersten Zeitspanne T1 auf 40 Sekunden für die hohen Rußemissionswerte und/oder ein Einstellen der zweiten Zeitspanne T2 auf 10 Sekunden vorgesehen. Vorteilhaft lassen sich sowohl die Rußoxidation des Partikelfilters bei der überstöchiometrischen Zusammensetzung als auch die Entschwefelung des NOX-Speicherkatalysators bei der unterstöchiometrischen Zusammensetzung optimieren, wobei sich eine maximale Effizienz der Entschwefelung und/oder Regeneration ergibt.

Bei einer weiteren Ausführungsform des Verfahrens ist ein Wechseln von der unterstöchiometrischen Zusammensetzung zu der überstöchiometrischen Zusammensetzung bei Erreichen eines Rußbeladungsmaximalwertes des Partikelfilters und/oder ein Wechseln von der überstöchiometrischen Zusammensetzung zu der unterstöchiometrischen Zusammensetzung bei einem Unterschreiten eines Rußbeladungsminimalwertes des Partikelfilters vorgesehen. Vorteilhaft kann eine Art Zweipunktregelung, insbesondere mittels zwei Schwellwerten und/oder mit Hystereseverhalten, zur Durchführung des Verfahrens realisiert werden. Zur Ermittlung eines Ist-Rußbeladungswertes, der mit dem Rußbeladungsmaximal- wert und/oder dem Rußbeladungsminimalwert verglichen werden kann, kann eine beliebige Messeinrichtung, beispielsweise eine Differenzdruck-Sensorvorrichtung dem Partikelfilter zugeordnet sein, mittels der sich der Rußbeladungswert des Partikelfilters ermitteln lässt. Alternativ und/oder zusätzlich ist es auch möglich, den Rußbeladungswert des Partikelfilters mittels eines Modells vorherzusagen. Die zweite Zeitspanne kann unter der Voraussetzung eines unabhängig von einem Betriebszustand des Verbrennungsmotors gleichschnell ablaufenden Abbrennens des Rußes über die Zyklen jeweils gleich eingestellt werden. Mittels einer Vorgabe der zweiten Zeitspanne ist es alternativ möglich, das Umschalten von der überstöchiometrischen Zusammensetzung zur unterstöchiometrischen Zusammensetzung gesteuert vorzunehmen.

Die Aufgabe ist außerdem mit einem Kraftfahrzeug mit einem Verbrennungsmotor und einer Abgasanlage mit einem NOX-Speicherkatalysator und einem Partikelfilter eingerichtet, ausgelegt und/oder konstruiert zum Durchführen eines vorab beschriebenen Verfahrens gelöst. Es ergeben sich die vorab beschriebenen Vorteile.

Weitere Vorteile, Merkmale und Einzelheiten ergeben sich aus der nachfolgenden Beschreibung, in der unter Bezug auf die Zeichnung ein Ausführungsbeispiel im Einzelnen beschrieben ist. Gleiche, ähnliche und/oder funktionsgleiche Teile sind mit gleichen Bezugszeichen versehen. Es zeigen:
- Figur 1: eine schematische Darstellung eines Verbrennungsmotors eines Kraftfahrzeuges mit einer Abgasanlage mit einem Partikelfilter und einem NOX-Speicherkatalysator;
- Figur 2: ein Diagramm über der Zeit einer Zusammensetzung eines Abgasstroms des Verbrennungsmotors zusammen mit einer davon abhängigen Rußbeladung des Partikelfilters bei geringen Rußemissionen; und
- Figur 3: das in Figur 2 gezeigte Schaubild, jedoch bei hohen Rußemissionen.

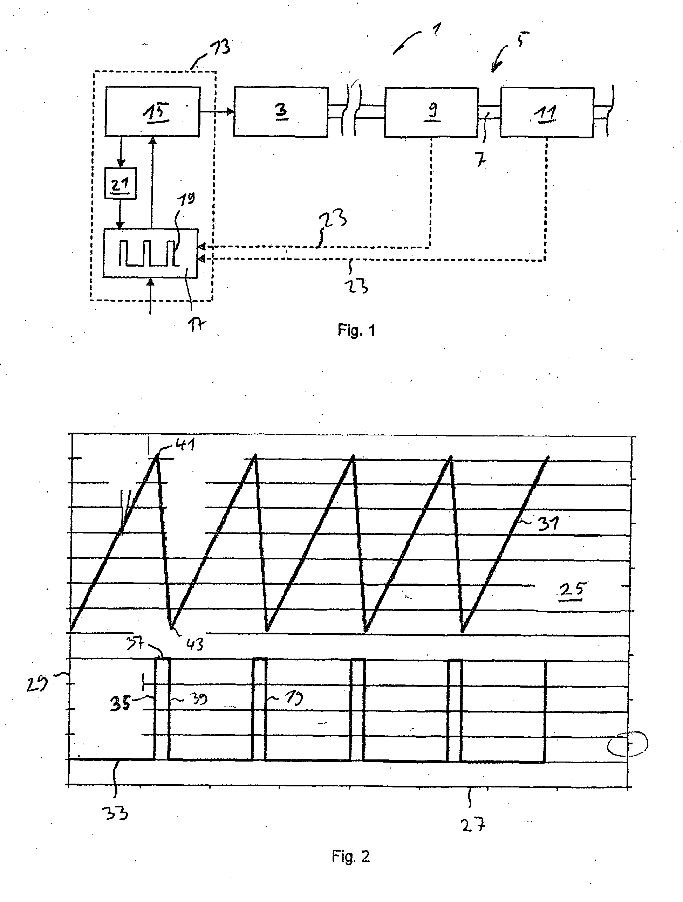

Figur 1 zeigt einen Teil eines Kraftfahrzeuges 1 mit einem Verbrennungsmotor 3. Der Verbrennungsmotor 3 ist einer Abgasanlage 5 zum Führen eines Abgasstroms 7 des Verbrennungsmotors 3 zugeordnet. Die Abgasanlage 5 weist neben anderen, nicht näher dargestellten Komponenten, einen Partikelfilter 9 und einen diesem nachgeschaltet angeordneten NOx-Speicherkatalysator (NSK) auf.

Bei dem Verbrennungsmotor 3 kann es sich um einen Verbrennungsmotor handeln, der geeignet ist, mit Luftüberschuss, also mit Lambda-Werten >1 betrieben zu werden, beispielsweise ein Dieselmotor oder Magermotor. Entsprechend kann es sich bei dem Partikelfilter 9 um einen Dieselpartikelfilter handeln. Zur Ansteuerung ist der Verbrennungsmotor 3 einer Motorsteuerung 13 mit einer Steuereinheit 15 zugeordnet. Mittels der Steuereinheit 15 kann auf unterschiedlichste Parameter des Verbrennungsmotors 3, beispielsweise eine Gemischbildung, insbesondere eine Einspritzmenge und/oder eine Abgasrückführungsrate, Einfluss genommen werden. Mittels der Steuereinheit 15 kann auch auf Komponenten der Abgasanlage 5, beispielsweise eine Sekundäreinspritzung und/oder eine Sekundärlufteinblasung, Einfluss genommen werden. Mithin kann mittels der Steuereinheit 15 eine Zusammensetzung 19 des Abgasstroms 7, beispielsweise eine stöchiometrische, unterstöchiometrische und/oder überstöchiometrische, eingestellt werden. Die Motorsteuerung 13 weist eine der Steuereinheit 15 zugeordnete Entschwefelungseinheit 17 auf. Mittels der Entschwefelungseinheit 17 kann auf die Steuereinheit 15 Ein-fluss genommen werden, um mittels einer Steuerung der Zusammensetzung 19 des Abgasstroms 7 eine Entschwefelung des NOx-Speicherkatalysators 11 vornehmen zu können. Die mittels der Entschwefelungseinheit 17 und der nachgeschalteten Steuereinheit 15 einstellbare Zusammensetzung 19 des Abgasstroms 7 ist mittels einer Rechtecklinie in der Entschwefelungseinheit 17 angedeutet. Zur Entschwefelung des NOx-Speicherkatalysators 11 kann mittels der Entschwefelungseinheit 17 die Zusammensetzung 19 sprunghaft zwischen einer überstöchiometrischen und einer unterstöchiometrischen Zusammensetzung geändert werden.

Zusätzlich ist die Entschwefelungseinheit 17 einem Kennfeld 21 zugeordnet. Das Kennfeld 21 kann beispielsweise mittels einer Verbindung zur Steuereinheit 15 zu einer aktuellen Betriebsweise des Verbrennungsmotors 3 zu erwartende Rußemissionen und damit einer zu erwartenden Beladung des Partikelfilters 9 liefern. Vorteilhaft kann mittels des Kennfeldes 21 die Entschwefelungseinheit 17 abhängig von zu erwartenden Rußemissionen, die sich an dem Partikelfilter 9 niederschlagen können, die Entschwefelung des NOx-Speicherkatalysators 11 vornehmen. Vorteilhaft kann zusätzlich mittels des Wechsels zu der überstöchiometrischen Zusammensetzung 19 der Partikelfilter 9 wieder regeneriert, also von der Partikelbeladung befreit werden. Mittels gestrichelter Linien sind in Figur 1 Datenverbindungen 23 zwischen dem Partikelfilter 9, dem NOx-Speicher-Katalysator 11 und der Motorsteuerung 13 bzw. der Entschwefelungseinheit 17 angedeutet. die Datenverbindungen 23 können mittels nicht näher dargestellter Sensoren und/oder Messeinrichtungen erzeugte Messdaten der Motorsteuerung 13 bzw. der Entschwefelungseinheit 17 zugeführt werden. Dabei kann es sich beispielsweise um eine Temperatur, Schwefelbeladung und/oder Partikelbeladung des Partikelfilters 9 und/oder des NOx-Speicherkatalysators 11 handeln.

Figur 2 zeigt ein Schaubild 25 über einer Zeitachse 27. Auf einer Y-Achse 29 des Schaubildes 25 ist die Zusammensetzung 19 des Abgasstroms 7 aufgetragen, beispielsweise als Lambda-Wert, beispielsweise zwischen 0,9 und 1,6. Über der Zusammensetzung 19 des Abgasstroms 7 ist qualitativ eine Beladung 31 des Partikelfilters 9 mit Rußpartikeln aufgetragen.

Es ist zu erkennen, dass mittels der Entschwefelungseinheit 17 die Zusammensetzung 19 rechteckförmig eingestellt wird. Während einer ersten Zeitspanne 33 (T1) wird eine unterstöchiometrische Zusammensetzung, beispielsweise mit einem Lambda-Wert von 0,95 oder maximal 0,95 mittels der Entschwefelungseinheit 17 eingestellt. An einer steigenden Flanke 35 wird die Zusammensetzung 19 des Abgasstroms 7 auf eine überstöchiometrische Zusammensetzung umgeschaltet, beispielsweise mit einem Lambda-Wert von 1,15 oder zumindest 1,15. Diese über- stöchiometrische Zusammensetzung wird für eine zweite Zeitspanne 37 (T2) eingestellt. An einer fallenden Flanke 39 wird die überstöchiometrische Zusammensetzung wieder auf die unterstöchiometrische Zusammensetzung zurückgeschaltet. Gemäß der Darstellung in Figur 2 kann die erste Zeitspanne 33 beispielsweise 60 Sekunden und die zweite Zeitspanne 37 beispielsweise 10 Sekunden betragen.

Es ist zu erkennen, dass während der ersten Zeitspanne 33 ein Ansteigen der Beladung 31 des Partikelfilters 9 erfolgt. Beim Schalten der steigenden Flanke 35 erreicht die Beladung 31 einen Rußbeladungsmaximalwert 41. Während der zweiten Zeitspanne 37 sinkt die Beladung 31 auf einen Rußbeladungsminimalwert 43 ab. Beim Schalten der fallenden Flanke 39 beginnt die Beladung 31 des Partikelfilters 9 erneut anzusteigen. Es ist zu erkennen, dass aufgrund der zyklischen Umschaltung der Zusammensetzung 19 eine Art sägezahnähnlicher Verlauf der Beladung 31 des Partikelfilters 9 entsteht, wobei die Beladung 31 im Mittel konstant gehalten werden kann.

Es ist denkbar, mittels der Datenverbindungen 23 die Beladung 31 zu ermitteln und der Entschwefelungseinheit 17 zuzuführen, wobei diese jeweils bei Erreichen des Rußbeladungsmaximalwertes 41 die steigende Flanke 35 und bei Erreichen des Rußbeladungsminimalwertes 43 die fallende Flanke 39 schaltet. Mithin ergibt sich während der gesamten in Figur 2 symbolisierten Zeitspanne eine Zweipunktregelung für die Beladung 31 des Partikelfilters 9, der vorteilhaft dadurch vor einer Überfrachtung mit Partikeln geschützt werden kann.

Alternativ ist es denkbar, das Schalten der Flanke 39 gesteuert vorzunehmen, beispielsweise nach einer, insbesondere festen, Vorgabe für die zweite Zeitspanne 37.

Die eigentliche Desulfatierung bzw. das Entschwefeln des NOx-Speicherkatalysators 11 findet jeweils während der sich wiederholenden ersten Zeitspannen 33 statt.

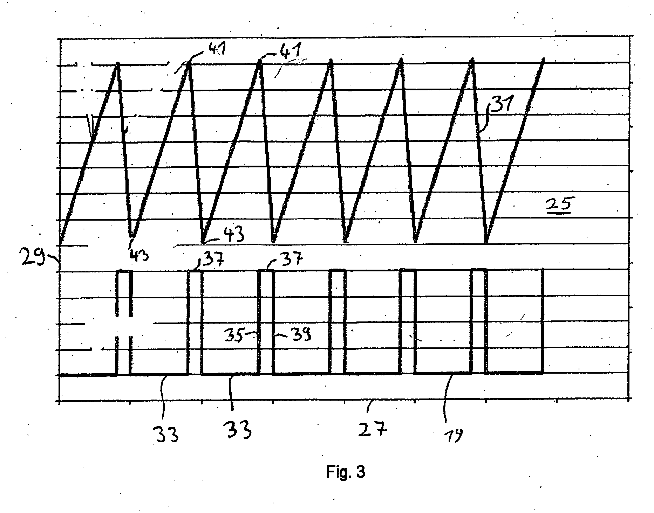

Figur 2 zeigt im Wesentlichen die in Figur 1 gezeigte Zusammensetzung 19 sowie Beladung 31 des NOx-Speicherkatalysators und des Partikelfilters 9. Im Unterschied dazu befindet sich der Verbrennungsmotor 3 in einem Betriebszustand mit vergleichsweise großen Partikelemissionen. Es ist zu erkennen, dass während der ersten Zeitspanne 33 die Beladung 31 einen steileren Verlauf, also einen schnelleren Anstieg erfährt. Dementsprechend ist zwischen dem Anstieg der Beladung 31 vom Rußbeladungsminimalwert 43 zum Rußbeladungsmaximalwert 41 die erste Zeitspanne 33 verkürzt. Es ist ersichtlich, dass mittels einer Verkürzung der ersten Zeitspanne 33 in Abhängigkeit von den Rußemissionen des Verbrennungsmotors 3 die mittlere Beladung 31 während der Entschwefelung des NOx-Speicher-Katalysators 11 konstant gehalten werden kann. Der Verlauf während der zweiten Zeitspanne 37, also das Abfallen der Beladung 31, verläuft im Vergleich zu Figur 3 im Wesentlichen gleich steil, mithin ist auch die zweite Zeitspanne 37 im Wesentlichen gleich lang, beispielsweise 10 Sekunden. Mittels des Kennfelds 21 ist es möglich, beide Flanken 35, 39 beziehungsweise Zeitspannen 33, 37 zu steuern, insbesondere abhängig von einem Betriebszustand des Verbrennungsmotors 3.

Die Entschwefelung des NOx-Speicherkatalysators 11 findet in Etappen während der zyklisch aufeinander folgenden ersten Zeitspannen 33 statt. Mittels der Datenleitungen 23 kann eine entsprechende Beladung des NOX Speicherkatalysators 11 ermittelt werden, wobei die Zusammensetzung 19 des Abgasstroms 7 solange hin- und hergeschaltet wird, bis eine ausreichende Entschwefelung des NOX Speicherkatalysators stattgefunden hat. Hierzu kann die Entschwefelungseinheit 17 ein entsprechendes Abbruchkriterium aufweisen. Es ist jedoch auch denkbar, die Entschwefelung rein zeitgesteuert durchzuführen und/oder eine maximale Anzahl von Zyklen festzulegen.

Der NOX Speicherkatalysator 11 (NSK) kann durch eine Einlagerung von Schwefeloxiden an Wirksamkeit verlieren. Vorteilhaft kann mittels des dargestellten Verfahrens diese Wirksamkeit durch Entschwefelung wiederhergestellt werden, wobei vorteilhaft die Beladung 31 des Partikelfilters 9 so gesteuert und/oder geregelt wird, dass der Rußbeladungsmaximalwert 41 nicht überschritten wird. Zum Betrieb des Verbrennungsmotors 3 kann sehr schwefelarmer Kraftstoff (beispielsweise S < 15 ppm) verwendet werden, wobei beispielsweise in regelmäßigen Abständen von ca. 2000 gefahrenen Kilometern die beschriebene Entschwefelung des NOX Speicherkatalysators 11 durchführbar ist. Die Entschwefelung kann bei der unterstöchiometrischen Abgaszusammensetzung bzw. Zusammensetzung 19 des Abgasstroms 7 durchgeführt werden.

Diese kann beispielsweise durch innermotorische Maßnahmen, beispielsweise angesteuert mittels der Steuereinheit 15 der Motorsteuerung 13, beispielsweise durch Aridrosselung einer Luftmenge, Nacheinspritzung und/oder anderer Maßnahmen eingestellt werden. Ferner können dabei Katalysatortemperaturen, insbesondere des NOX Speicherkatalysators 11, zwischen 600 und 700 °C eingestellt werden.

Diese unterstöchiometrische Zusammensetzung bzw. dieser Motorbetrieb mit Lambdawerten kleiner 1, bzw. einer Fettphase des Entschwefelns (DeSOx) kann vorteilhaft in bestimmten Kennfeldbereichen des Kennfelds 21 selbst bei hohen Partikel-Emissionen, beispielsweise bei höheren Lasten und/oder Drehzahlen (beispielsweise mit Werten von m_{Ruß} > 100 g pro Stunde) erfolgen. Vorteilhaft kann trotz derartiger hoher Partikelmengen eine mit diesen sonst einhergehende Überschreitung einer zulässigen Rußmasse auf dem Partikelfilter 9 sicher vermieden werden. Vorteilhaft wird der Rußbeladungsmaximalwert 41 nicht überschritten. Vorteilhaft kann dadurch ein sonst notwendiger Abbruch der Entschwefelung bzw. eines DeSox-Betriebes oder schlimmstenfalls bei einer Nichterkennung eine Zerstörung des Partikelfilters 9 verhindert werden.

Vorteilhaft kann während des Einstellens der unterstöchiometrischen Zusammensetzung 19 des Abgasstroms 7 eine akkumulierte Rußmasse, die während dieser Phase anfällt, durch ein zyklisches Rückschalten in einen überstöchiometrischen Betrieb (Magerphase des DeSOx) bzw. der überstöchiometrischen Zusammensetzung 19 sofort wieder abgebaut werden. Die Zusammensetzung 19 kann in Form eines im Wesentlichen rechteckförmigen Wobbelns, bevorzugt zwischen Lambdawerten zwischen 0,95 und mindestens 1,15 eingestellt werden. Bei Lambdawerten von mindestens 1,15 steht ausreichend Oxidationsmittel, vorwiegend Sauerstoff, für die Rußoxidation zur Verfügung.

Vorteilhaft kann eine Frequenz und/oder eine Dauer des Wobbelns kennfeldabhängig mittels des Kennfeldes 21 durchgeführt werden. In Kennfeldbereichen mit geringeren Rußemissionen kann das Verhältnis der Fett- zu Magerzeiten, also der ersten Zeitspanne 33 zur zweiten Zeitspanne 37 beispielsweise 60 Sekunden zu 10 Sekunden betragen (Vergleich Figur 2). In Kennfeldbereichen mit hohen Rußemissionen kann dieses Verhältnis zu 40 Sekunden zu 10 Sekunden verschoben werden (Vergleich Abbildung 3). Durch die kennfeldangepasste Zykluslänge und/oder Frequenz der Mager- bzw. Fettphasen wird eine optimale Rußoxidation in den Magerphasen bei gleichzeitig optimaler Effizienz des DeSOx ermöglicht.

### Bezugszeichenliste

- 1: Kraftfahrzeug
- 3: Verbrennungsmotor
- 5: Abgasanlage
- 7: Abgasstrom
- 9: Partikelfilter
- 11: NOX Speicherkatalysator
- 13: Motorsteuerung
- 15: Steuereinheit
- 17: Entschwefelungseinheit
- 19: Zusammensetzung
- 21: Kennfeld
- 23: Datenverbindung
- 25: Schaltbild
- 27: Zeitachse
- 29: y-Achse
- 31: Beladung
- 33: erste Zeitspanne
- 35: steigende Flanke
- 37: zweite Zeitspanne
- 39: fallende Flanke
- 41: Rußbeladungsmaximalwert
- 43: Rußbeladungsminimalwert

## Patentansprüche

1. Verfahren bei einem Verbrennungsmotor (3) eines Kraftfahrzeuges (1) mit einer einen Abgasstrom (7) des Verbrennungsmotors (3) führenden Abgasanlage (7) mit einem NOX Speicherkatalysator (11) (NSK) und einem Partikelfilter (9), mit wechselweisem
- Entschwefeln des NOX Speicherkatalysators (11) mittels Einstellen einer unterstöchiometrischen Zusammensetzung (19) des in der Abgasanlage (5) geführten Abgasstroms (7),
- Regenerieren des Partikelfilters (9) mittels Einstellen einer überstöchiometrischen Zusammensetzung (19) des in der Abgasanlage (5) geführten Abgasstroms (7) zum sofortigen Abbauen einer während der unterstöchiometrischen Zusammensetzung angesammelten Beladung (31) des Partikelfilters (9).

2. Verfahren nach Anspruch 1, mit zumindest einem der folgenden Schritte:
- Einstellen der unterstöchiometrischen Zusammensetzung (19) für eine erste Zeitspanne (33),
- Einstellen der überstöchiometrischen Zusammensetzung (19) für eine zweite Zeitspanne (37).

3. Verfahren nach einem der vorhergehenden Ansprüche, mit zumindest einem der folgenden Schritte:
- Einstellen der unterstöchiometrischen Zusammensetzung (19) für ein Lambda von 0,95 oder maximal 0,95,
- Einstellen der überstöchiometrischen Zusammensetzung (19) für ein Lambda von 1,15 oder zumindest 1,15.

4. Verfahren nach einem der vorhergehenden zwei Ansprüche mit zumindest einem der folgenden Schritte:
- Einstellen der ersten Zeitspanne (33) in Abhängigkeit eines Rußemissionswerte aufweisenden Kennfeldes (21),
- Einstellen der zweiten Zeitspanne (37) in Abhängigkeit des die Rußemissionswerte aufweisenden Kennfeldes (21).

5. Verfahren nach dem vorhergehenden Anspruch, mit zumindest einem der folgenden Schritte:
- Erhöhen der ersten Zeitspanne (33) für geringere Rußemissionswerte des Kennfeldes (21), und umgekehrt,
- Erhöhen der zweiten Zeitspanne (37) für hohe Rußemissionswerte des Kennfeldes (21), und umgekehrt.

6. Verfahren nach einem der vorhergehenden zwei Ansprüche, mit zumindest einem der folgenden Schritte:
- Einstellen der ersten Zeitspanne (33) auf 60 Sekunden für die geringen Rußemissionswerte,
- Einstellen der ersten Zeitspanne (33) auf 40 Sekunden für die hohen Rußemissionswerte,
- Einstellen der zweiten Zeitspanne (37) auf 10 Sekunden.

7. Verfahren nach einem der vorhergehenden Ansprüche, mit zumindest einem der folgenden Schritte:
- Wechseln von der unterstöchiometrischen Zusammensetzung zu der überstöchiometrischen Zusammensetzung bei Erreichen eines Rußbeladungsmaximalwerts (41) des Partikelfilters (9),
- Wechseln von der überstöchiometrischen Zusammensetzung zu der unterstöchiometrischen Zusammensetzung bei Erreichen und/oder Unterschreiten eines Rußbeladungsminimalwerts (43) des Partikelfilters (9).

8. Kraftfahrzeug (1) mit einem Verbrennungsmotor (3) und einer Abgasanlage (5) mit einem NOX Speicherkatalysator (11) und einem Partikelfilter (9), ausgelegt, eingerichtet und/oder konstruiert zum Durchführen eines Verfahrens nach einem der vorhergehenden Ansprüche.
